# FASCICULE DE BREVET EUROPEEN

(11) **EP 3 945 671 B1**
(45) Date de publication et mention de la délivrance du brevet: **04.10.2023**
(21) Numéro de dépôt: 21186980.5
(22) Date de dépôt: 21.07.2021
(51) Int. Cl.: H02M 3/06, H02M 1/36, G05F 1/46

(54) **CIRCUIT POUR FOURNIR UNE TENSION DE RÉFÉRENCE FILTRÉE ET DISPOSITIF D'ALIMENTATION EXPLOITANT UN TEL CIRCUIT**
SCHALTKREIS ZUR BEREITSTELLUNG EINER GEFILTERTEN REFERENZSPANNUNG UND STROMVERSORGUNGSVORRICHTUNG ZUM BETRIEB EINES SOLCHEN SCHALTKREISES
CIRCUIT FOR PROVIDING A REFERENCE FILTERED VOLTAGE AND SUPPLY DEVICE USING SUCH A CIRCUIT

(30) Priorité: 30.07.2020 FR 2008130
(43) Date de publication de la demande: 02.02.2022
(73) Titulaire: Autovib, 25480 Miserey Salines (FR)
(72) Inventeur: BARTOLI, Frédéric, 38960 SAINT ETIENNE DE CROSSEY (FR)
(74) Mandataire: IP Trust

(56) Documents cités:
- EP-A1- 3 572 818
- US-A1- 2018 275 701

## Description

### DOMAINE DE L'INVENTION

La présente invention concerne un circuit visant à fournir une tension de référence à faible bruit en basse fréquence et très basse fréquence. Elle trouve une application particulière pour former une alimentation électrique d'un circuit intégré microélectromécanique, tel qu'un capteur d'accélération « MEMS » (de l'acronyme anglo-saxon « Micro ElectroMechanicalSystems » ou « système microélectromécanique »).

### ARRIERE PLAN TECHNOLOGIQUE DE L'INVENTION

Les documents EP3572818A et US8179121 proposent un capteur d'accélération présentant une interface deux fils au format IEPE, l'accéléromètre du capteur pouvant être un accéléromètre MEMS. Dans ces capteurs, la tension d'alimentation du MEMS est puisée de l'interface deux fils. On peut prévoir à cet effet, pour parer aux possibles variations de la tension présente à cette interface deux fils, une référence de tension comprenant par exemple un composant à bande interdite (référence de tension « bandgap » selon la terminologie généralement employée dans le domaine). Cette référence de tension (qui peut être intégrée au circuit MEMS ou disposée sur un support de routage électrique sur lequel se trouve également disposé le composant MEMS) fournit une tension de référence stable au composant MEMS, indépendante des variations que subit la tension d'alimentation du capteur ou des variations de température.

Un accéléromètre MEMS présente l'avantage de fournir une mesure statique et basse fréquence d'une accélération (par exemple inférieur à 1kHz) avec un rapport signal sur bruit très favorable, indépendant de la fréquence. Le signal de sortie d'un accéléromètre MEMS est généralement le produit d'une tension interne de référence (généralement la tension d'alimentation) par la mesure brute de l'accélération. Ce signal est centré sur la moitié de sa tension d'alimentation (la tension fournie par la référence de tension lorsque celle-ci est présente). En conséquence, et par conception, un tel composant présente une faible réjection de la tension d'alimentation et on retrouve pour moitié dans son signal de sortie, le bruit contenu dans la référence de tension. Or, une référence de tension bandgap présente généralement un niveau de bruit élevé par exemple de 3 microvolts par racine carré de Hertz pour une référence de tension basse consommation pour son plancher de bruit blanc. A ce plancher s'ajoute un bruit en 1/f, dans les gammes de fréquences basses, par exemple inférieur à 1kHz, ces gammes de fréquences formant justement le domaine d'opération privilégié d'un accéléromètre MEMS.

On peut naturellement prévoir de munir la référence de tension d'un filtre passe-bas. Mais ce filtrage passe-bas peut imposer une fréquence de coupure extrêmement basse. Par exemple, atténuer 30dB de bruit à 0,1Hz impose d'élaborer un filtre présentant une fréquence de coupure à 0,003 Hz, et une constante de temps de 50 secondes environ. Un tel filtre présente un régime transitoire, à sa mise en route, conduisant à un temps d'établissement à 99% de la valeur finale de 4 minutes, voire plus. Pendant ce régime transitoire extrêmement long, le capteur d'accélération que l'on a muni du filtre ne peut être exploité avec sa pleine précision, ce qui est très désavantageux.

Le document US20180275701 propose un filtre d'une tension d'alimentation, le filtre étant commuté pour limiter le délai d'établissement de la tension filtrée lorsque le dispositif est mis en route. Ce filtre n'est toutefois nullement adapté au filtrage à très basse fréquence d'un bruit en 1/f, par exemple à une fréquence de coupure d'1Hz ou moins.

### OBJET DE L'INVENTION

Un but de l'invention est de remédier au moins en partie à ce problème. Elle vise plus particulièrement à proposer un circuit comprenant un filtre passe-bas pour fournir une tension de référence filtrée, le circuit présentant un temps d'établissement de régime transitoire bien plus court que celui imposé par la constante de temps, très longue, du filtre passe-bas. Le circuit est applicable au filtrage passe-bas de toute référence de tension, et trouve une application particulière pour élaborer une tension d'alimentation d'un capteur MEMS, notamment un accéléromètre. Le circuit est avantageusement très simple, si bien qu'il peut être intégré au composant MEMS lui-même ou disposé sur un circuit de routage électrique de petite dimension, par exemple inférieur à 1cm^2.

### BREVE DESCRIPTION DE L'INVENTION

En vue de la réalisation de ce but, l'objet de l'invention propose un circuit pour fournir une tension de référence filtrée selon la revendication 1. Des caractéristiques facultatives sont couvertes par les revendications dépendantes.

### BREVE DESCRIPTION DES FIGURES

D'autres caractéristiques et avantages de l'invention ressortiront de la description détaillée de l'invention qui va suivre en référence aux figures annexées sur lesquels :
[Fig. 1] La figure 1 représente un schéma de principe d'un circuit conforme à l'invention ;
[Fig. 2] La figure 2 représente un exemple de mise en oeuvre d'un circuit conforme à l'invention ;
[Fig. 3] La figure 3 représente un chronogramme expliquant le fonctionnement du circuit de la figure 2 ;
[Fig. 4]
[Fig. 5a]
[Fig. 5b]
[Fig. 5c]
[Fig. 6]
[Fig. 7]
[Fig. 8]

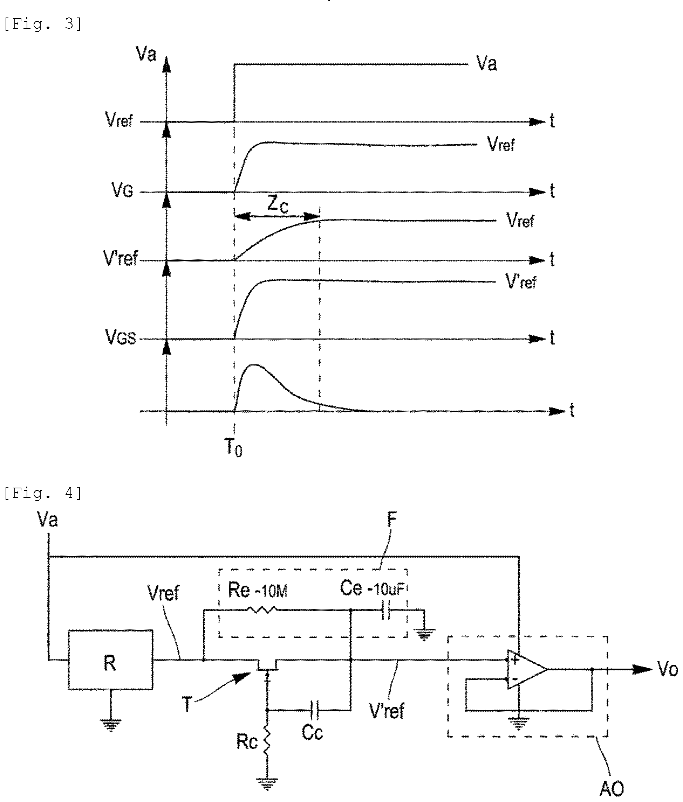

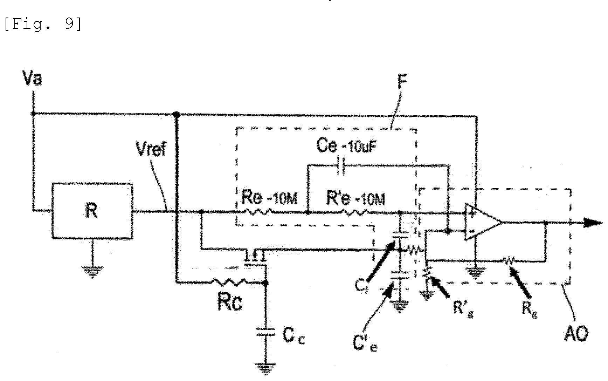

[Fig. 9] Les figures 4, 5a, 5b, 5c, 6 à 9 représentent d'autres exemples de mise en oeuvre d'un circuit conforme à l'invention.

### DESCRIPTION DETAILLEE DE L'INVENTION

En introduction, on rappelle que la constante de temps (en seconde) d'un dipôle formé d'une résistance de valeur r (en Ohm) et d'une capacité de valeur c (en Farad) est le produit Tau =r*c. Le temps d'établissement à 95% d'un circuit du premier ordre comprenant ce dipôle est de 3*Tau, et à 99% de l'ordre de 5 Tau. D'une manière plus générale, et dans le cadre de la présente demande, on considérera que la constante de temps d'un circuit correspond à 1/5 de son temps d'établissement à 99%.

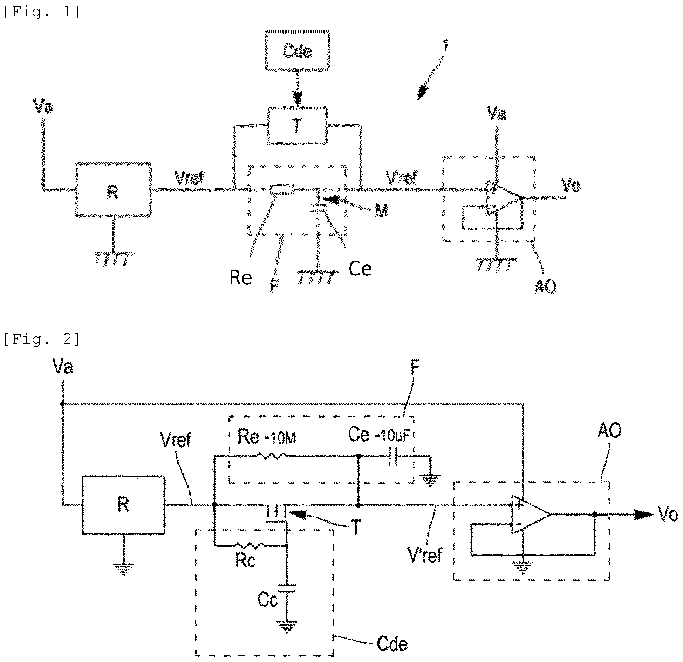

La figure 1 représente un schéma de principe d'un circuit 1 pour fournir une tension de référence filtrée. Le circuit 1 comprend une référence de tension R, par exemple une référence de tension bandgap comme cela a été exposé en introduction de cette demande. La référence de tension R reçoit une tension d'alimentation Va du circuit et fournit une tension de référence Vref, par exemple comprise entre 1,5V et 5V, cette tension de référence Vref étant plus stable que la tension d'alimentation.

Le circuit 1 comprend également un filtre passe-bas F électriquement relié à la référence de tension R. Le filtre passe-bas peut présenter un ordre de filtre quelconque, et cet ordre pourra être choisi selon la réponse en fréquence désirée de ce filtre F. Avantageusement cet ordre est supérieur ou égal à deux. Il présente une fréquence de coupure relativement basse, par exemple comprise entre 10^-3 Hz et 1 kHz. Dans le domaine des mesures vibratoire pris en exemple dans cette description, cette fréquence de coupure est avantageusement inférieure à 0.10 Hz ou à 1Hz. En conséquence il présente une constante de temps et un temps d'établissement à 99% très long, par exemple un temps d'établissement de plusieurs minutes. De manière bien connue en soi, un tel filtre passe-bas peut être formé d'un étage ou d'une pluralité d'étages, chaque étage comprenant une résistance d'étage Re électriquement reliée, en un point milieu d'étage M, à une capacité d'étage Ce. Les résistances Re et les capacités Ce des étages déterminent la constante de temps du filtre et sa fréquence de coupure. Le point milieu M de l'étage (ou du dernier étage, s'il en existe plusieurs) porte la tension de référence filtrée V'ref et forme donc le signal de sortie de ce filtre F. A titre d'exemple, et dans le cadre de mesures vibratoires, on peut choisir chaque résistance d'étage Re entre 1 MOhms et 100 MOhms, chaque capacité d'étage entre 1 microF et 100 microF. Dans le cas d'un filtre de premier ordre, comprenant donc un unique étage, on définit de la sorte une constante de temps du filtre typiquement supérieure à 10 secondes, et donc un temps d'établissement à 99% de près d'une minute.

Optionnellement, le circuit 1 peut comprendre un étage tampon AO, par exemple pour ajuster l'impédance du circuit 1. Cet étage tampon AO est ici formé d'un amplificateur opérationnel, alimenté par la tension d'alimentation Va et monté en suiveur de tension. La sortie électrique V0, dite tension utile, de l'étage tampon présente donc la même tension que celle présente à son entrée différentielle, la tension de référence filtrée V'ref. On pourrait également prévoir que l'étage tampon présente un gain, par exemple la tension de référence filtrée V'ref peut présenter une valeur de 3V et la tension utile peut présenter une valeur de 5V. Un tel mode de mis en oeuvre est représenté sur la figure 9 qui sera détaillé dans un passage ultérieur de cette description.

On note que l'amplificateur opérationnel mettant en oeuvre l'étage tampon AO, lorsque celui-ci est présent, est choisi pour présenter un niveau de bruit, notamment en basse fréquence, sensiblement plus faible que le seuil de bruit imposé par le composant électronique applicatif (l'accéléromètre MEMS dans l'exemple décrit). L'introduction, dans le circuit 1, de l'étage tampon AO derrière le filtre F ne détériore donc pas significativement la qualité du signal électrique fourni.

Le point milieu M du dernier étage du filtre forme la sortie du filtre. Ce point porte la tension de référence filtrée V'ref qui peut être fournie à un composant électronique pour l'alimenter. Dans l'application préférée, ce composant électronique est un capteur de mesures vibratoires, tel qu'un accéléromètre qui peut être en oeuvre par un circuit intégré micro-électromécanique (MEMS). Lorsque l'étage tampon AO est présent, la tension utile V0 fournie par cet étage est celle fournie au composant électronique pour l'alimenter.

Comme on l'a déjà mentionné, le circuit 1 décrit jusqu'à présent comporte un régime transitoire, à sa mise en route, dont la durée est excessive pour l'application visée. Ce régime transitoire vise à charger les capacités d'étages à leurs tensions nominales.

Pour les valeurs données en exemple du filtre dans une section précédente de cette description, ce régime transitoire présente une durée typique (de l'ordre de cinq fois la constante de temps de ce filtre F), de 50secondes ou plus. Pour poursuivre cet exemple, on recherche à raccourcir la durée de ce régime transitoire très largement sous les 50 secondes, par exemple sous la seconde, voire même de l'ordre de la milliseconde. Pour permettre d'obtenir un temps d'établissement rapide du circuit, on a muni le circuit 1 d'au moins un circuit de commutation T et d'au moins un circuit de commande Cde de ce circuit T. Dans l'exemple décrit, le circuit de commutation T est un transistor, mais on pourrait envisager tout autre forme de circuit permettant de sélectivement autoriser la circulation des charges électriques entre deux électrodes dites « de conduction » à l'aide d'un signal de commande fournie sur une électrode dite « de commande ». Il peut par exemple s'agir d'un commutateur ou d'un multiplexeur analogique.

Le transistor T pris en exemple est disposé en parallèle au filtre F. Lorsque le transistor T est passant (polarisé en conduction) sa résistance à l'état passant Rds_on est disposée en parallèle à la résistance d'étage Re. Le transistor T comprend une grille, un drain électriquement relié à la référence de tension R et une source électriquement reliée au point milieu M (on note que la configuration inverse est également possible : un drain électriquement relié au point milieu une source électriquement reliée référence de tension R). Le transistor T présente une résistance à l'état passant Rds_on, entre le drain et la source, dont la valeur est bien inférieure à la valeur de la résistance d'étage Re. Typiquement, la résistance à l'état passant Rds_on d'un transistor (par nature relativement faible) sera inférieure de plusieurs décades à la résistance d'étage Re (choisie pour être importante et contribuer à la fréquence de coupure basse du filtre F). La résistance à l'état passant Rds_on du transistor T est typiquement inférieure ou égale à 1 Ohm, de l'ordre de 100milliohms ou quelques centaines de milliohms.

Le circuit 1 comprend également un circuit de commande Cde de la grille du transistor T. Ce circuit Cde est configuré pour polariser le transistor T en conduction à la mise en route du circuit 1 pendant une période de démarrage prédéterminé. Par « mise en route du circuit », on désigne l'instant T0 auquel la tension d'alimentation Va est appliquée au circuit 1, et notamment à la référence de tension R. Dans la configuration « passante », la résistance à l'état passant Rds_on du transistor T efface la résistance d'étage Re avec laquelle il est placé en parallèle et se combine à la capacité d'étage Ce pour élever la tension du point milieu d'étage M portant la tension de référence filtrée V'ref avec une constante de temps d'établissement très inférieure à la constante de temps du filtre F. En négligeant la présence de la résistance d'étage Re, la constante de temps de la configuration passante du circuit 1 correspond au produit Rds_on*Ce, de l'ordre des 100 microsecondes en prenant les valeurs de l'exemple. La période de démarrage prédéterminée pendant lequel le transistor T (ou plus généralement le circuit de commutation) est commandé passant peut être choisi très librement, supérieur à la constante de temps de la configuration passante du circuit 1. Il peut par exemple être choisi de l'ordre de la seconde ou de 10 secondes, ou plus. On peut notamment choisir qu'il présente une durée supérieure à 30 secondes, afin de garantir la bonne charge de toutes les capacités du circuit. On note que pendant la période de démarrage pendant laquelle le circuit de commande Cde pilote le circuit de commutation T pour qu'il soit passant, le composant électronique applicatif est bien alimenté et fonctionnel, même s'il ne dispose pas d'une tension d'alimentation filtrée.

Le circuit de commande Cde peut prendre toute forme qui convient, il peut notamment s'agir d'un circuit analogique ou digital mettant en oeuvre une fonction de minuteur de la période de démarrage prédéterminée. Le circuit de commande peut également mettre en oeuvre d'autres fonctions que celle visant à piloter le circuit de commutation. Il peut s'agit par exemple d'une fonction visant à réinitialiser certaines au moins des capacités présentent dans le circuit 1, par exemple en actionnant des commutateurs disposés entres les bornes de ces capacités, afin d'accélérer la stabilisation du filtre passe-bas au démarrage ou au redémarrage du circuit 1.

Avantageusement toutefois, pour garder le caractère compact du circuit 1 et toute sa simplicité lorsqu'il est mis en oeuvre par des composants discrets, et comme cela sera présenté dans les exemples qui suivent, le circuit de commande Cde comprend un dipôle ou circuit série RC, comprenant une résistance de commande Rc et une capacité de commande Ce, définissant un point milieu de commande Mc relié à la grille du transistor T. Le circuit de commande Cde est disposé entre une tension de commande (par exemple la tension d'alimentation Va, la tension de référence Vref, la tension de référence filtrée V'ref ou la tension utile V0) et la masse du circuit 1. Les valeurs de la résistance Rc et de la capacité Ce du circuit de commande Cde sont choisies pour définir un temps d'établissement du signal de commande appliqué à la grille du transistor T supérieur au temps d'établissement visant à charger rapidement la capacité d'étage Ce, et donc conforme à la période de démarrage prédéterminée.

De la sorte, on s'assure très simplement que le transistor T est placé dans un état de conduction pendant une durée suffisamment longue permettant de charger pleinement la capacité d'étage Ce du filtre. On peut par exemple choisir la résistance de commande Rc et la capacité de commande Ce pour qu'elles présentent des valeurs dix fois inférieures aux valeurs de la résistance d'étage Re et à la capacité d'étage Ce. La constante de temps du circuit de commande est alors 100 fois inférieure à la constante de temps du filtre F, mais reste supérieure à la constante de temps du circuit 1 lorsque le transistor T est passant.

En référence à la figure 2 on présente maintenant un exemple de mise en oeuvre des principes qui viennent d'être exposés. On retrouve bien sur cet exemple la référence de tension R alimentée par la tension d'alimentation Va, l'étage tampon AO optionnel, le filtre basse fréquence F, ici formé d'un unique étage comportant une résistance Re d'étage et une capacité Ce d'étage. La constante de temps du filtre F est ici de 100 secondes, conduisant à un temps d'établissement de ce filtre (en absence des moyens prévus par l'invention) de l'ordre de 500s. Le transistor T est ici un transistor MOSFET de type P dont la résistance à l'état passant Rds_on est estimée à 1 ohm (plus généralement 1 à 10 ohms). A l'état passant, cette résistance Rds_on est en parallèle avec la résistance d'étage Re, et la constante de temps d'établissement de ce montage 1 est de l'ordre de 100 microsecondes.

Le circuit de commande Cde de cet exemple est formé d'un circuit série RC, la résistance Rc étant connectée à la sortie de la référence de tension R (portée à la tension de référence Vref) et la grille du transistor T. La capacité de commande Ce est quant à elle disposée entre la grille du transistor T et la masse du circuit 1. Avec les valeurs choisies de la résistance Rc et de la capacité Ce du circuit de commande Cde, le transistor T est maintenu passant pendant une durée Tau_c de l'ordre de 100 ms (définissant la période de démarrage), ce qui est bien supérieur aux quelques 100 microsecondes ou quelques millisecondes nécessaires pour charger la capacité d'étage Ce et finaliser la période transitoire d'établissement du circuit 1 à son démarrage. La mise en oeuvre du circuit de commande par l'intermédiaire d'un nombre réduit de composants simples, ici une simple combinaison d'une résistance de commande Rc et d'une capacité de commande Ce, permet de préserver la simplicité et la compacité de ce circuit Cde et d'un circuit 1 conforme à l'invention.

La figure 3 représente l'évolution des tensions dans le circuit 1 de la figure 2 depuis l'instant T0 de sa mise en route. Durant cette phase de démarrage (montée de tension de la référence filtrée V'ref) le PMOS est polarisé en conduction par le circuit de commande Cde dont la constante de temps est grande par rapport au temps de montée de la tension de référence filtrée V'ref. Durant cette montée la constante de temps du circuit 1 est le produit Ce*Rds_on, la charge de la capacité d'étage Ce (V'ref correspondant également à la tension portée par la source du transistor T) est donc quasi instantané.

Une fois la tension de référence filtrée V'ref stabilisée, le potentiel de grille rejoint celui du drain, qui lui-même est au potentiel de la source du transistor T. On arrive donc à VGS=0 et le transistor T est bloqué. On note que la diode intrinsèque du transistor T (ie entre le drain et la source) assure que ce transistor puisse se mettre en conduction en forçant le potentiel de source à monter (0.5-0.6V max sous la tension de drain) au démarrage. La résistance dynamique à tension nulle de la diode intrinsèque du transistor T présente un impact négligeable sur la constante de temps du filtre en fonctionnement normal.

De nombreuses variantes à cet exemple sont possibles. D'une manière générale, le circuit de commutation T peut être mis en oeuvre par touteforme de transistor (JFET, BJT, MOSFET...) et de tout type (N ou P) car, par définition, celui-ci est bloqué pendant le fonctionnement normal du circuit 1, c'est à dire en dehors de la période de démarrage. On ajustera le circuit de commande Cde pour élaborer le signal de commande adapté au transistor choisi. Par exemple, on peut remplacer le transistor MOSFET de la figure 2 par un transistor JFET. Un tel transistor étant passant à la tension grille-source Vgs = 0, le filtre F se charge naturellement à la mise en route du circuit, puis la tension grille-source passant sous la tension de seuil du transistor, celui-ci s'ouvre. Un tel exemple de réalisation est représenté sur la figure 4.

La résistance Rc du circuit de commande est électriquement reliée à la tension de référence Vref sur l'exemple de la figure 2. Mais on pourrait naturellement envisager de relier cette résistance à d'autres tensions du circuit, le tout étant de définir un signal de commande sur la grille du transistor T présentant une constante de temps supérieure la constante de temps du circuit 1 lors du chargement rapide de la capacité d'étage Ce pendant le régime transitoire.

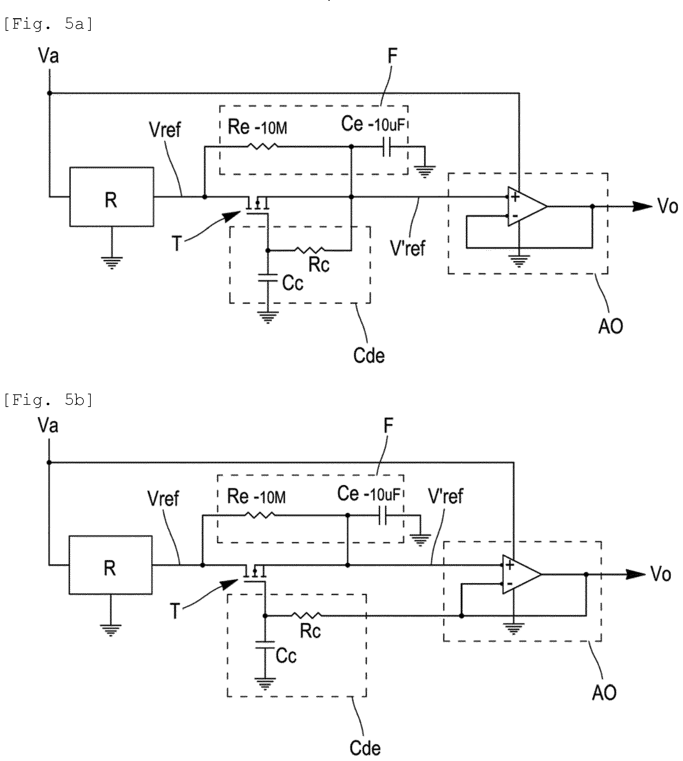

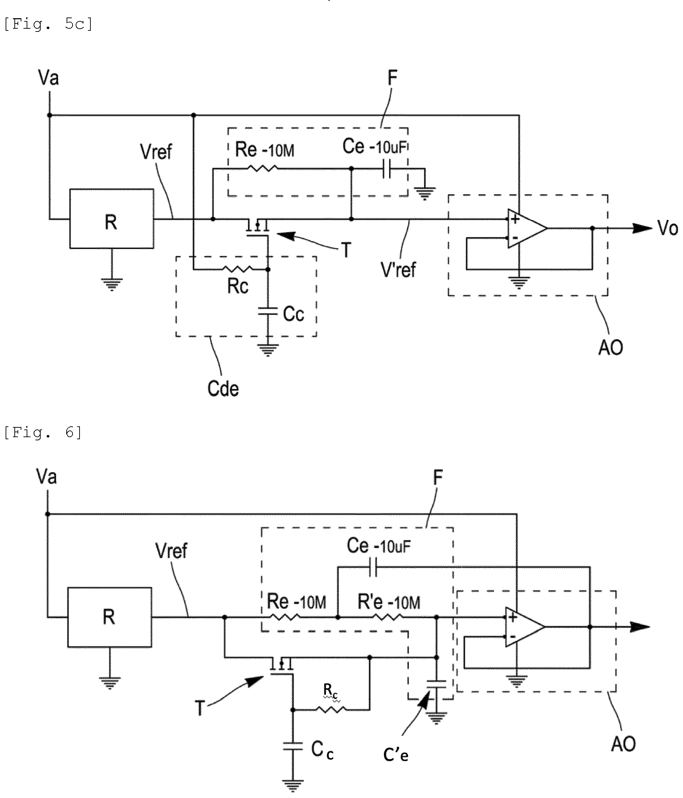

Ainsi, sur les figures 5a à 5c, on présente des exemples où cette résistance Rc est reliée au point milieu M du filtre F (tension de référence filtrée V'ref - figure 5a), à la tension utile V0 issu de l'étage tampon AO (figure 5b), à la tension d'alimentation Va (figure 5c).

Le filtre F peut également être composé d'une pluralité d'étages et selon un schéma possible, chaque étage peut être muni d'un transistor T et d'un circuit de commande Cde pour charger en un temps réduit la résistance Ce d'étage. Alternativement, un même circuit de commande peut commander les grilles de la pluralité de transistors T.

La figure 6 représente une configuration avantageuse d'un circuit 1 comprenant un filtre à plusieurs étages, et donc d'ordre supérieur à 1, ici une structure de type Sallen-Key. Un unique transistor T est disposé en parallèle avec le filtre F, et donc avec l'ensemble des résistances Re, R'e des étages. Le drain du transistor T est relié à la tension de référence Vref fournie par la référence de tension R, et la source de ce transistor est relié au point milieu M du dernier étage du filtre F. Comme on l'a déjà noté, une configuration inverse est également possible. La capacité d'étage C'e de ce dernier étage est reliée entre le point milieu de ce dernier étage et la masse du circuit 1.

On note qu'un filtre d'ordre strictement supérieur à 1 présente l'avantage de ramener le filtre à l'équilibre, lorsqu'il s'en écarte, dans une durée plus réduite qu'un filtre d'ordre 1. Cet écart par rapport à l'équilibre peut être provoqué par les gradients de température que le dispositif est susceptible de subir dans son environnement d'exploitation.

Les capacités Ce des étages intermédiaires sont quant à elle reliées, directement ou indirectement à la tension de référence V'ref ou à la tension utile V0 fournie par l'étage tampon AO (comme c'est le cas de la figure 6). En régime établi, les points milieu de chaque étage sont donc sensiblement portés à la tension de référence filtrée V'ref (ou à la tension utile V0). Le régime transitoire vise donc à élever la tension de tous ces points milieu en chargeant très rapidement toutes les capacités d'étages.

Lorsque le transistor T est à l'état passant, au démarrage du circuit 1, il court-circuite le filtre F et charge très rapidement la capacité C'e du dernier étage de ce filtre F. Cela permet d'élever simultanément la tension de tous les autres points milieu de ce filtre en chargeant toutes les autres capacités Ce d'étage.Une telle configuration est avantageuse en ce qu'elle permet avec un circuit très simple (un unique transistor/circuit de commutation et un dipôle RC/dispositif de commande) de placer le circuit 1 en régime établi avec un transitoire extrêmement court, même lorsque l'ordre du filtre F est élevé.

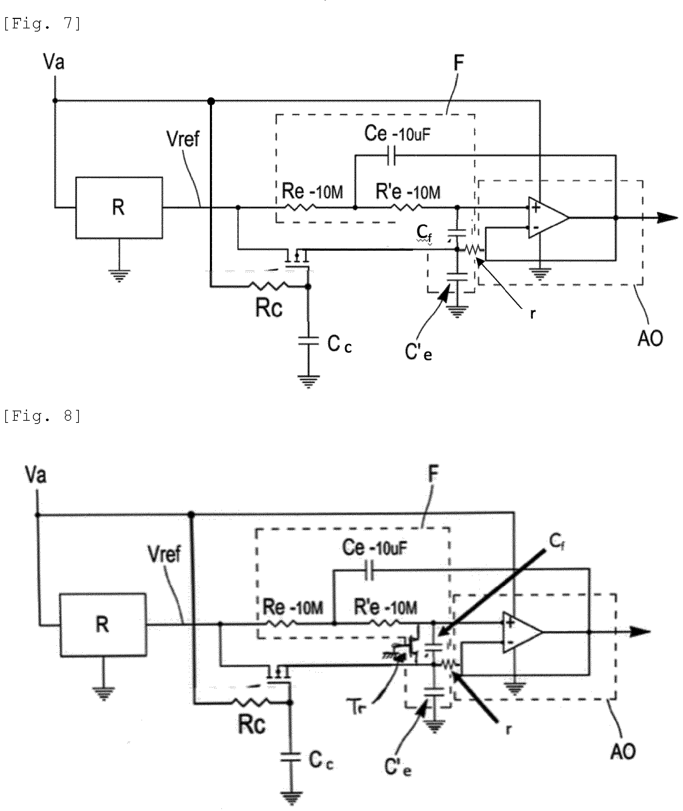

La figure 7 représente une variante du circuit de la figure 6 comprenant un filtre à plusieurs étages. Cette variante prévoit un circuit d'absorption-compensation Cf, r qui vise à compenser l'éventuel courant de fuite de la capacité C'e du dernier étage, disposée entre le point milieu de ce dernier étage et la masse du circuit. Un tel courant de fuite, s'il est excessif, pourrait conduire à écarter excessivement la tension de référence filtrée V'ref (et donc la tension utile V0) de la tension de référence Vref.

Dans ce circuit de la figure 7, on a placé une capacité additionnelle Cf entre la résistance R'e du dernier étage du filtre et la capacité d'étage C'e, et en série avec cette capacité C'e. La capacité additionnelle Cf présente une valeur bien plus grande que la capacité d'étage (par exemple 5 ou 10 fois plus grande), si bien que la valeur de la capacité équivalente de cette branche série est très similaire à la capacité C'e de ce dernier étage. Dit autrement, les tensions présentent de part et d'autre de la capacité additionnelle Cf sont très proches les unes des autres, voire identiques, et correspondent donc à la tension de référence filtrée V'ref. On considérera dans cette configuration que le point milieu de ce dernier étage du filtre F est disposé entre la capacité additionnelle Cf et la capacité d'étage C'e. On note d'ailleurs que l'électrode du circuit de commutation T est bien relié à ce point milieu, ce qui permet d'élever directement la tension présente aux bornes de la capacité d'étage C'e lorsque ce circuit est commandé passant, conformément aux principes déjà exposé de la présente invention. On a prévu enfin une résistance de fuite r entre le point milieu de ce dernier étage et l'une des entrées de l'étage tampon AO (celle électriquement reliée à la tension utile V0 sur la figure 7). Dans cette configuration, l'étage tampon AO fourni le courant de fuite pouvant circuler à travers la capacité C'e de ce dernier étage, reliée à la masse du circuit. On évite ou on limite ainsi l'apparition d'un écart entre la tension de référence Vref et la tension de référence filtrée V'ref.

Le circuit d'absorption-compensation qui vient d'être présenté dans le cadre d'un filtre F à deux étages, pourrait tout naturellement être incorporée à un filtre présentant un nombre quelconque d'étage, pour absorber-compenser le courant de fuite de la capacité disposée entre la tension de référence filtrée V'ref et la masse du circuit.

Pour être complet, on note que dans la figure 7 la résistance de commande Rc est reliée à la tension d'alimentation Va, et non à la tension de référence comme cela était le cas sur la figure 6. Comme on l'a déjà évoqué, la tension à laquelle la résistance de commande est reliée n'est nullement critique tant que cette tension est suffisamment importante, et un circuit peut comprendre une résistance de commande Rc reliée à une source quelconque de tension ou un noeud quelconque du circuit fournissant une tension suffisante pour ouvrir le circuit de commutation T.

Dans le but d'accélérer la stabilisation du filtre au démarrage ou au redémarrage du circuit 1, on pourra également incorporer dans le circuit d'absorption-compensation des moyens permettant de décharger la capacité additionnelle Cf à l'extinction ou au démarrage/redémarrage du circuit 1. Il peut notamment s'agir d'un commutateur de décharge disposé entres les bornes la capacité additionnelle Cf, en parallèle à cette capacité, permettant de court circuiter cette capacité ou permettant de relier ces électrodes à une même tension du circuit. Comme on l'a déjà noté, ces commutateurs peuvent être piloté par le circuit de commande, notamment lorsque celui-ci est mis en oeuvre par un circuit digital.

Alternativement, et comme cela est représenté sur la figure 8, le commutateur peut être autonome. Sur cette figure, le commutateur est mis en oeuvre par un transistor JFET disposé en parallèle de la capacité additionnelle Cf, la source et le drain étant électriquement reliés aux bornes de cette capacité. La grille du transistor est reliée à la masse. En fonctionnement la tension entre la source et la grille est supérieure à la tension de seuil du transistor, ce qui le rend bloquant. A l'extinction du circuit 1, la capacité d'étage C'e tend à se décharger, si bien que la tension de point milieu, entre cette capacité et la capacité additionnelle Cf tend également à porter une tension de masse. La tension entre la source et la grille du transistor passe sous la tension de seuil, ce qui rend le transistor passant et conduit à équilibrer les tensions présentent aux bornes de la capacité additionnelle Cf.

Outre la capacité additionnelle Cf, on pourra prévoir de munir d'autres capacités du circuit 1 de ces moyens de décharge, voire même d'équiper toutes les capacités de ce circuit 1. Les commutateurs mis en oeuvre peuvent indifféremment être pilotés par le circuit de commande Cde ou être autonome.

Bien entendu l'invention n'est pas limitée aux exemples décrits et on peut y apporter des variantes de réalisation sans sortir du cadre de l'invention tel que défini par les revendications.

On peut notamment prévoir d'exploiter la tension utile V0 fournie à la sortie de l'étage tampon AO et l'injecter de manière rétroactive à l'entrée de la référence de tension R, par exemple en remplacement de la tension d'alimentation Va. Ainsi seul l'AO est alimenté par Va et le circuit de référence R est alimenté à partir de V0. Dans ce cas notamment, il peut être utile de prévoir, dans le circuit 1 qui vient d'être décrit, un circuit additionnel d'assistance au démarrage.

D'autres éléments encore peuvent être inclus dans un circuit 1 conforme à l'invention. On peut par exemple prévoir des éléments assurant un redémarrage contrôlé lors d'un cycle rapide d'une séquence de mise hors tension-remise sous tension du circuit 1. Il peut s'agir par exemple d'une résistance en parallèle sur la sortie de la référence de tension R dont le but est de garantir une remise à zéro de la constante de temps du circuit de commande Cde, indépendamment de la nature de la référence de tension R.

Enfin, et afin d'éviter toute dérive de fonctionnement du circuit avec des variations de la température, on pourra choisir les composants (notamment les résistances et capacités du circuit) pour que leurs valeurs soient particulièrement insensibles à la température. Alternativement, on peut prévoir des moyens compensant les éventuelles dérives en température de ces valeurs.

La figure 9 présente un mode de mise en oeuvre dans lequel l'étage tampon AO présente un gain, déterminé par le rapport existant entre une première résistance de gain Rg et une deuxième résistance de gain R'g, comme cela est bien connu en soit.

Dans ce mode de mise en oeuvre, et pour éviter l'apparition d'un régime transitoire du filtre F, on préfère connecter l'une des bornes de la résistance d'étage Ce à une entrée de l'étage tampon AO, plutôt qu'à une sortie de cet étage.

L'invention trouve un intérêt particulier pour former une alimentation d'un circuit intégré micro-électromécanique. Selon une première approche, le circuit 1 est intégré au circuit intégré lui-même, la capacité Ce, typiquement de forte valeur, peut être externe au circuit intégré. Dans ce cas, le circuit intégré est alimenté par la tension d'alimentation Va qui est reportée sur une broche de ce circuit intégré à laquelle le circuit 1 selon l'invention est relié. Ce circuit 1 intégré fournit la tension de référence filtrée V'ref (ou la tension utile V0) au reste du circuit intégré micro-électromécanique. Dans cette approche « intégrée » le circuit de commande Cde peut prendre une forme plus complexe, par exemple une forme numérique, que le dipôle RC proposé en exemple.

Selon une seconde approche, le circuit intégré micro-électromécanique et le circuit 1 selon l'invention sont disposés sur un support de routage électrique. Dans ce cas, la tension de référence filtrée V'ref (ou la tension utile V0) est reportée sur une broche d'alimentation du circuit intégré micro-électromécanique. Le circuit 1 de l'invention étant particulièrement simple, ce support de routage peut être de dimension très réduite, moins de 1cm^2 par exemple. Dans cette approche, il peut être avantageux de former le circuit de commande Cde à partir de composants discrets.

Comme on l'a présenté en introduction, un circuit conforme à l'invention trouve une application toute particulière lorsque le circuit intégré micro-électromécanique est un accéléromètre. Mais le circuit de l'invention peut être exploité pour alimenter tout type de circuit intégré, et plus généralement encore, pour fournir une tension de référence filtrée de son bruit sous une fréquence de coupure qui peut être très basse.

## Revendications

1. Circuit (1) pour fournir une tension de référence filtrée (V'ref) comprenant :
- une référence de tension (R) recevant une tension d'alimentation (Va) et fournissant une tension de référence (Vref) ;
- un filtre passe-bas (F) présentant une fréquence de coupure inférieure à 1Hz et électriquement relié à la référence de tension (R) et comprenant un étage formé d'une résistance d'étage (Re) électriquement reliée en un point milieu (M) à une capacité d'étage (Ce), la résistance d'étage (Re) et la capacité d'étage (Ce) définissant au moins en partie une constante de temps du filtre et le point milieu (M) portant la tension de référence filtrée (V'ref) ;
- un circuit de commutation (T) comprenant une électrode de commande, deux électrodes de conduction dont une électriquement reliée au point milieu (M), le circuit de commutation (T) présentant une résistance à l'état passant entre les deux électrodes de conduction dont la valeur est inférieure à la valeur de la résistance d'étage (Re) ;
- un circuit de commande (Cde) relié à l'électrode de commande du circuit de commutation (T) et configuré pour rendre passant le circuit de commutation (T) à la mise en route du circuit (1) pendant une période de démarrage prédéterminée, la résistance à l'état passant du circuit de commutation (T) se combinant à la capacité d'étage (Ce) pour élever la tension de référence filtrée (V'ref) avec une constante de temps d'établissement inférieure à la constante de temps du filtre, le circuit de commande (Cde) élaborant un signal de commande présentant une constante de temps de commande supérieure ou égale à la constante de temps d'établissement, le circuit de commande (Cde) comprenant un circuit série RC définissant un point milieu de commande (Mc) relié à l'électrode de commande du circuit de commutation (T), le circuit série RC étant disposé entre une tension de commande (Va ; Vref ; V'ref ; V0) et une masse du circuit (1).

2. Circuit (1) selon la revendication précédente dans lequel la résistance d'étage (Re) et la capacité d'étage (Ce) sont choisis telles que la constante de temps du filtre soit supérieure à 1 seconde, et avantageusement supérieure à 100 secondes.

3. Circuit (1) selon l'une des revendications précédentes dans lequel le circuit de commutation (T) est un transistor.

4. Circuit (1) selon la revendication précédente dans lequel le transistor est un transistor MOSFET de type N ou P ou un transistor JFET.

5. Circuit (1) selon la revendication 1 ou 2 dans lequel le circuit de commutation (T) est un commutateur ou un multiplexeur analogique.

6. Circuit (1) selon l'une des revendications précédentes dans lequel la période de démarrage prédéterminée est inférieure à 30 secondes ou une minute.

7. Circuit (1) selon l'une des revendications précédentes dans lequel la résistance à l'état passant du circuit de commutation (T) est telle que la constante de temps d'établissement est inférieure à 1 seconde, préférentiellement inférieure à 100 ms.

8. Circuit (1) selon l'une des revendications précédentes comprenant également un étage tampon (AO) recevant en entrée la tension de référence filtrée (V'ref) et fournissant une tension utile (V0).

9. Circuit (1) selon la revendication précédente dans lequel l'étage tampon (AO) comprend un amplificateur opérationnel monté en suiveur de tension ou à gain.

10. Circuit (1) selon l'une des revendications précédentes dans lequel le filtre (F) comprend au moins un deuxième étage formé d'une résistance de deuxième étage (Re') électriquement reliée à une capacité de deuxième étage (Ce'), la capacité de deuxième étage (Ce') étant également électriquement reliée à une sortie du circuit (V'ref ; V0).

11. Circuit (1) selon l'une des revendications précédentes comprenant un circuit d'absorption-compensation (Cf, r) d'un courant de fuite d'une capacité d'étage (Ce ; C'e).

12. Circuit (1) selon la revendication précédente dans lequel le circuit d'absorption-compensation comprend une capacité additionnelle (Cf) et un commutateur de décharge (Tr) disposé en parallèle de la capacité additionnelle.

13. Dispositif comprenant un circuit intégré micro-électromécanique (MEMS) et un circuit (1) selon l'une des revendications précédentes, le circuit (1) produisant une tension d'alimentation du circuit intégré micro-électromécanique (MEMS).

14. Dispositif selon la revendication précédente dans lequel le circuit (1) est intégré au circuit intégré micro-électromécanique (MEMS).

15. Dispositif selon la revendication 12 comprenant un support de routage électrique, le circuit intégré micro-électromécanique (MEMS) et le circuit (1) étant disposés sur le support de routage électrique.

16. Dispositif d'alimentation selon l'une des revendications 12 à 14, dans lequel le circuit intégré micro-électromécanique (MEMS) est un accéléromètre.

## Patentansprüche

1. Schaltung (1) zum Bereitstellen einer gefilterten Referenzspannung (V'ref), umfassend:
- eine Spannungsreferenz (R), die eine Versorgungsspannung (Va) empfängt und eine Referenzspannung (Vref) bereitstellt;
- einen Tiefpassfilter (F), der eine Grenzfrequenz von weniger als 1 Hz aufweist und elektrisch mit der Spannungsreferenz (R) verbunden ist und eine Stufe umfasst, die aus einem Stufenwiderstand (Re) gebildet ist, der an einem Mittelpunkt (M) elektrisch mit einer Stufenkapazität (Ce) verbunden ist, wobei der Stufenwiderstand (Re) und die Stufenkapazität (Ce) mindestens teilweise eine Zeitkonstante des Filters definieren und der Mittelpunkt (M) die gefilterte Referenzspannung (V'ref) trägt;
- einen Schaltkreis (T), der eine Steuerelektrode, zwei Leitungselektroden, von denen eine mit dem Mittelpunkt (M) elektrisch verbunden ist, umfasst, wobei der Schaltkreis (T) einen Widerstand in dem Durchlasszustand zwischen den zwei Leitungselektroden aufweist, dessen Wert kleiner ist als der Wert des Stufenwiderstands (Re);
- eine Steuerschaltung (Cde), die mit der Steuerelektrode des Schaltkreises (T) verbunden und konfiguriert ist, um den Schaltkreis (T) bei dem Einschalten der Schaltung (1) für eine vorbestimmte Startperiode durchlässig zu machen, wobei der Widerstand in dem Durchlasszustand des Schaltkreises (T) mit der Stufenkapazität (Ce) kombiniert wird, um die gefilterte Referenzspannung (V'ref) mit einer Einstellzeitkonstante zu erhöhen, die kleiner als die Zeitkonstante des Filters ist, wobei die Steuerschaltung (Cde) ein Steuersignal ausarbeitet, das eine Steuerzeitkonstante aufweist, die größer als oder gleich der Einstellzeitkonstante ist, wobei die Steuerschaltung (Cde) eine Reihenschaltung RC umfasst, die einen Steuermittelpunkt (Mc) definiert, der mit der Steuerelektrode des Schaltkreises (T) verbunden ist, wobei die Reihenschaltung RC zwischen einer Steuerspannung (Va; Vref; V'ref; V0) und einer Masse der Schaltung (1) angeordnet ist.

2. Schaltung (1) nach dem vorstehenden Anspruch, wobei der Stufenwiderstand (Re) und die Stufenkapazität (Ce) so gewählt sind, dass die Zeitkonstante des Filters größer als 1 Sekunde und vorteilhafterweise größer als 100 Sekunden ist.

3. Schaltung (1) nach einem der vorstehenden Ansprüche, wobei der Schaltkreis (T) ein Transistor ist.

4. Schaltung (1) nach dem vorstehenden Anspruch, wobei der Transistor ein MOSFET-Transistor von dem N- oder P-Typ oder ein JFET-Transistor ist.

5. Schaltung (1) nach Anspruch 1 oder 2, wobei der Schaltkreis (T) ein analoger Schalter oder Multiplexer ist.

6. Schaltung (1) nach einem der vorstehenden Ansprüche, wobei die vorbestimmte Startperiode weniger als 30 Sekunden oder eine Minute beträgt.

7. Schaltung (1) nach einem der vorstehenden Ansprüche, wobei der Widerstand in dem Durchlasszustand des Schaltkreises (T) derart ist, dass die Einstellzeitkonstante weniger als 1 Sekunde, vorzugsweise weniger als 100 ms, beträgt.

8. Schaltung (1) nach einem der vorstehenden Ansprüche, die auch eine Pufferstufe (AO) umfasst, die an einem Eingang die gefilterte Referenzspannung (V'ref) empfängt und eine Nutzspannung (V0) bereitstellt.

9. Schaltung (1) nach dem vorstehenden Anspruch, wobei die Pufferstufe (AO) einen Operationsverstärker umfasst, der als Spannungsfolger oder mit Verstärkung geschaltet ist.

10. Schaltung (1) nach einem der vorstehenden Ansprüche, wobei der Filter (F) mindestens eine zweite Stufe umfasst, die aus einem Widerstand der zweiten Stufe (Re') gebildet ist, der elektrisch mit einer Kapazität der zweiten Stufe (Ce') verbunden ist, wobei die Kapazität der zweiten Stufe (Ce') auch elektrisch mit einem Ausgang der Schaltung (V'ref; V0) verbunden ist.

11. Schaltung (1) nach einem der vorstehenden Ansprüche, umfassend eine Absorption-Kompensationsschaltung (Cf, r) eines Leckstroms einer Stufenkapazität (Ce; C'e).

12. Schaltung (1) nach dem vorstehenden Anspruch, wobei die Absorption-Kompensationsschaltung eine zusätzliche Kapazität (Cf) und einen Entladungsschalter (Tr) umfasst, der parallel zu der zusätzlichen Kapazität angeordnet ist.

13. Vorrichtung, umfassend eine integrierte mikroelektromechanische Schaltung (MEMS) und eine Schaltung (1) nach einem der vorstehenden Ansprüche, wobei die Schaltung (1) eine Versorgungsspannung der integrierten mikroelektromechanischen Schaltung (MEMS) erzeugt.

14. Vorrichtung nach dem vorstehenden Anspruch, wobei die Schaltung (1) in die integrierte mikroelektromechanische Schaltung (MEMS) integriert ist.

15. Vorrichtung nach Anspruch 12, umfassend einen Träger für eine elektrische Führung, wobei die integrierte mikroelektromechanische Schaltung (MEMS) und die Schaltung (1) auf dem Träger für die elektrische Führung angeordnet sind.

16. Versorgungsvorrichtung nach einem der Ansprüche 12 bis 14, wobei die integrierte mikroelektromechanische Schaltung (MEMS) ein Beschleunigungsmesser ist.

## Claims

1. Circuit (1) for supplying a filtered reference voltage (V'ref), comprising:
- a voltage reference (R) receiving a supply voltage (Va) and providing a reference voltage (Vref);
- a low-pass filter (F) which has a cutoff frequency of less than 1 Hz, is electrically connected to the voltage reference (R) and comprises a stage formed by a stage resistance (Re) electrically connected at a midpoint (M) to a stage capacitor (Ce), the stage resistance (Re) and the stage capacitor (Ce) at least partially defining a time constant of the filter and the midpoint (M) carrying the filtered reference voltage (V'ref);
- a switching circuit (T) comprising a control electrode, and two conduction electrodes, one of which is electrically connected to the midpoint (M), the switching circuit (T) having an on-state resistance between the two conduction electrodes, the value of which resistance is less than the value of the stage resistance (Re);
- a control circuit (Cde) connected to the control electrode of the switching circuit (T) and configured to turn the switching circuit (T) on when the circuit (1) is turned on for a predetermined startup period, the on-state resistance of the switching circuit (T) combining with the stage capacitor (Ce) to raise the filtered reference voltage (V'ref) with a settling time constant less than the filter time constant, the control circuit (Cde) producing a control signal having a control time constant greater than or equal to the settling time constant, the control circuit (Cde) comprising an RC series circuit defining a control midpoint (Mc) connected to the control electrode of the switching circuit (T), the RC series circuit being arranged between a control voltage (Va; Vref; V'ref; Va) and the ground of the circuit (1).

2. Circuit (1) according to the preceding claim, wherein the stage resistance (Re) and the stage capacitor (Ce) are chosen such that the time constant of the filter is greater than 1 second, and advantageously greater than 100 seconds.

3. Circuit (1) according to one of the preceding claims, wherein the switching circuit (T) is a transistor.

4. Circuit (1) according to the preceding claim, wherein the transistor is an N or P type MOSFET transistor or a JFET transistor.

5. Circuit (1) according to claim 1 or 2, wherein the switching circuit (T) is a switch or analog multiplexer.

6. Circuit (1) according to one of the preceding claims, wherein the predetermined startup period is less than 30 seconds or one minute.

7. Circuit (1) according to one of the preceding claims, wherein the on-state resistance of the switching circuit (T) is such that the settling time constant is less than 1 second, preferably less than 100 ms.

8. Circuit (1) according to one of the preceding claims, also comprising a buffer stage (AO) receiving the filtered reference voltage (V'ref) as input and supplying a useful voltage (V0).

9. Circuit (1) according to the preceding claim, wherein the buffer stage (AO) comprises an operational amplifier mounted as a voltage follower or with a gain.

10. Circuit (1) according to one of the preceding claims, wherein the filter (F) comprises at least a second stage formed by a second stage resistance (Re') electrically connected to a second stage capacitor (Ce'), the second stage capacitor (Ce') also being electrically connected to an output of the circuit (V'ref; V0).

11. Circuit (1) according to one of the preceding claims, comprising an absorption-compensation circuit (Cf, r) for a leakage current of a stage capacitor (Ce; C'e).

12. Circuit (1) according to the preceding claim, wherein the absorption-compensation circuit comprises an additional capacitor (Cf) and a discharge switch (Tr) arranged in parallel with the additional capacitor.

13. Device comprising a micro-electromechanical integrated circuit (MEMS) and a circuit (1) according to one of the preceding claims, the circuit (1) producing a supply voltage for the micro-electromechanical integrated circuit (MEMS).

14. Device according to the preceding claim, wherein the circuit (1) is integrated into the micro-electromechanical integrated circuit (MEMS).

15. Device according to claim 12, comprising an electrical routing support, the micro-electromechanical integrated circuit (MEMS) and the circuit (1) being arranged on the electrical routing support.

16. Power supply device according to one of claims 12 to 14, wherein the micro-electromechanical integrated circuit (MEMS) is an accelerometer.
